# EUROPÄISCHE PATENTANMELDUNG

(11) **EP 0 824 968 A2**
(43) Veröffentlichungstag der Anmeldung: **25.02.1998**
(21) Anmeldenummer: 97890164.3
(22) Anmeldetag: 14.08.1997
(51) Int. Cl.: B03B 9/06

(54) **Verfahren und Einrichtung zur Bestimmung der Reinheit von aufbereitetem Altglas**

(30) Priorität: 21.08.1996 AT 1505/96
(71) Anmelder: Binder & Co. Aktiengesellschaft, 8200 Gleisdorf (AT)
(72) Erfinder: Gschweitl, Karl Heinz, 8211 Grosspesendorf (AT)
(74) Vertreter: Kliment, Peter

(57) **Zusammenfassung**

Verfahren zur Bestimmung der Reinheit von aufbereitetem Altglas, bei dem die Probenmenge aus dem aufbereiteten Altglas strom entnommen und vorzugsweise einlagig aufgeschüttet und über eine Freifallstrecke rieseln gelassen, und die Fremdkörper nach Nichteisen-Metallen und opaken Fremdstoffen nach einer getrennten Erfassung dieser Gruppen von Fremdstoffen ausgeblasen und gewogen werden und zur Feststellung der Güte der Probe die Verhältniszahlen von Nichteisen-Metall-Beimengungen zur gesamten Probenmenge, bzw. der opaken Fremdstoffe zur gesamten Probenmenge ermittelt werden, wobei diese Gruppen von Fremdstoffe gemeinsam kontinuierlich gewogen und die Gewichtszunahmen je nach dem welche Gruppe von Fremdstoffen - Nichteisen-Metalle oder opake Fremdstoffe - unmittelbar vor einer Gewichtszunahme erfaßt wurde, dieser Gruppe von Fremdstoffen zugezählt wird. Um den Anteil an Fremdstoffen in der Probe exakt ermitteln zu können, ist vorgesehen, daß vor der Erfassung der erwähnten Gruppen von Fremdstoffen in einem ersten Schritt aus dem über die Freifallstrecke rieselnden Materialstrom Glasstücke aussortiert und die vorerst als Fremdstoffe taxierten Stücke, gegebenenfalls nach einer Zwischenlagerung, von anhaftenden Resten von Etiketten u.dgl. befreit werden und danach wieder über eine Freifallstrecke rieseln gelassen werden, wobei Glasstücke und die Fremdstoffe voneinander getrennt und je nach Erfassung den opaken Fremdstoffen oder den Nichteisen-Metallen zugeordnet werden.

## Beschreibung

Die Erfindung bezieht sich auf ein Verfahren zur Bestimmung der Reinheit von aufbereitetem Altglas gemäß dem Oberbegriff des Anspruches 1.

Bei der Aufbereitung von Altglas muß ein hohes Maß an Freiheit von Fremdstoffen gewährleistet sein. So darf das aufbereitete Altglas pro Tonne maximal 20g opaker Fremdkörper, wie Keramik, Porzellan oder Steine, und maximal 5g Nichteisen-Metalle enthalten. Diese hohen Reinheitsgrade sind erforderlich, da heute bereits bis zu 95% Altglas der Schmelze zugesetzt wird. Diese hohen Reinheitsgrade müssen von den Altglasaufbereitern garantiert und durch Proben des aufbereiteten Altglases nachgewiesen werden. Da diese Beprobungen in regelmäßigen Intervallen während der Aufbereitung stattfinden und aufgrund der sehr geringen zugelassenen Verunreinigungen, insbesondere durch Keramik, Steine, Porzellan und Nichteisenmetalle, große Probenmengen notwendig sind, gestaltet sich die Analyse des aufbereiteten Altglases sehr aufwendig.

Durch die ÖP 400 906 wurde ein Verfahren der eingangs erwähnten Art bekannt. Bei diesem bekannten Verfahren wird die Probenmenge einmal über eine Freifallstrecke rieseln gelassen und dabei von den Sensoren erkannten opake Fremdstoffe, wie Keramik-, Stein- und Porzellanteile, im weiteren kurz KSP-Teile genannt, wie auch Nichteisenteile, im weiteren kurz NE-Teile genannt ausgeblasen. Dabei werden sowohl KSP-Teile, wie auch NE-Teile in einem Fremdstoff-Auffangbehälter und die Reinglasteile in einem Reinglas-Auffangbehälter gesammelt, wobei durch Erfassung der Gewichtszunahme des Fremdstoff-Auffangbehälters und des vorangegangenen Ansprechens entweder eines auf NE-Teile ansprechenden Sensors oder eines auf KSP-Teile ansprechenden Sensors die jeweils darauffolgende Gewichtszunahme des Fremdstoff-Auffangbehälters der jeweiligen Gruppe von Fremdstoffen zuge zählt wird, wodurch die in der Probe enthaltenen Massen an KSP-Teilen und NE-Teilen erfaßt und in Bezug zur in der Probe enthaltenen Masse an Glasteilen gesetzt werden kann.

Es hat sich gezeigt, daß in manchen Fällen an den Glasteilen haftende Reste von Etiketten, insbesondere solchen aus metallisiertem Papier, zu einer Klassierung des Teiles als NE-Teil oder opaker Teil führt und als Fremdstoff ausgeschieden wird, obwohl dieser Teil durchaus als Wertstoff zu betrachten ist und verwendet werden könnte.

Ziel der Erfindung ist es, diesen Nachteil zu vermeiden und ein Verfahren der eingangs erwähnten Art vorzuschlagen, das eine ordungsgemäße Klassierung der einzelnen Teile der Probe ermöglicht.

Erfindungsgemäß wird dies bei einem Verfahren der eingangs erwähnen Art durch die kennzeichnenden Merkmale des Anspruches 1 erreicht.

Durch das vorgeschlagene Verfahren ist sichergestellt, daß die aus der Probe vorerst als Fremdstoffe klassierten Teile von allenfalls anhaftenden Etikettenresten befreit werden und dann erst Reinglasteile und Fremdstoffe voneinander getrennt werden, wobei die Zuordnung der ausgeschiedenen Fremdstoffe zu einer der beiden Gruppen, nämlich KSP-Teile und NE-Teile in der bekannten Weise durch Erfassung der Gewichtszunahme des Fremdstoff-Auffangbehälters und Zuordnung zu jener Gruppe, deren Sensor unmittelbar vorher angesprochen hat, erfolgt.

Durch die Merkmale des Anspruches 2 ergibt sich der Vorteil, daß eine relativ einfach aufgebaute Einrichtung verwendet werden kann. Es ist aber grundsätzlich auch möglich getrennte mit Freifallstrecken versehene Sortiereinrichtungen für die gesamte Probe und für die vorerst als Fremdstoffe klassierten Teile derselben vorzusehen.

Ein weiters Ziel der Erfindung ist es, eine Einrichtung zur Durchführung des erfindungsgemäßen Verfahrens vorzuschlagen.

Ausgehend von einer Einrichtung gemäß dem Oberbegriff des Anspruches 3 wird eine Einrichtung gemäß dem Kennzeichen des Anspruches 3 vorgeschlagen.

Durch die vorgeschlagenen Maßnahmen kann das erfindungsgemäße Verfahren auf sehr einfache Weise durchgeführt werden. So ist bei der erfindungsgemäßen Einrichtung sichergestellt, daß die gesamte Probenmenge vorerst in Reinglasteile und Restteile getrennt wird, wobei es sich bei den Restteilen um Teile handelt, die nicht eindeutig als Glasteile erkannt wurden. Dazu gehören auch Glasteile, an den Reste von Etiketten haften und die daher z.B. als opake Teile klassiert wurden.

Diese Restteile werden gegebenenfalls nach einer Zwischenlagerung in einer entsprechenden Einrichtung von den Etikettenresten befreit. Die von den Etikettenresten befreiten Restteile können dann einfach nach Glasteilen und Fremstoffteilen sortiert werden, wobei die Zuordnung der ausgeschiedenen Fremdstoffteile zur Gruppe der KSP-Teile und der NE-Teile in bekannter Weise erfolgen kann.

Durch die Maßnahmen nach dem Anspruch 4 ergibt sich der Vorteil, daß die Entfernung der Etikettenreste sehr rasch und sicher erfolgt und sich, verglichen mit dem Einsatz von Lösungsmitteln zur Zerstörung des Haftfilmes der Etiketten, auch eine geringere Umweltbelastung ergibt.

Durch die Merkmale des Anspruches 5 ergibt sich der Vorteil, daß eine Belastung der Umwelt praktisch vollständig vermieden wird. Der dabei anfallende mit Papierstaub vermischte Glasstaub kann problemlos wiederaufbereitet werden. Dazu genügt es, die zu kleinen Partikel auszuscheiden, wobei diese der schmelze zugeführt werden können. Die darin enthaltenen Papierpartikel verbrennen in der Schmelze und sind für die Qualität des hergestellten Glases unschädlich.

Die Merkmale des Anspruches 6 ermöglichen einen in konstruktiver Hinsicht einfachen Aufbau der Einrichtung.

Durch die Maßnahmen gemäß dem Anspruch 7 ergibt sich die Möglichkeit auf einfache Weise eine hohe Auflösung zu erreichen und dadurch auch kleine Fremdstoffteile, insbesondere NE-Teile zu erfassen, wie z.B. Bruchteile von metallischen Flaschenverschlüssen.

Grundsätzlich genügt es auch im Bereich der von der gesamten Probenmenge durchrieselten Freifallstrecke lediglich Sensoren zur Erfassung opaker Teile anzuordnen, doch weisen solche Sensoren für die Erfassung sehr kleiner Teile, wie eben Bruchteile von Flaschenverschlüssen, meist eine zu geringe Empfindlichkeit auf, oder es kann mit diesen für die Erkennung solcher Teile kein ausreichend hohes Auflösungsverhältnis erreicht werden.

Die Erfindung wird nun anhand der Zeichnung näher erläutert. Dabei zeigen:
Fig. 1 schematisch eine Einrichtung zur Durchführung des erfindungsgemäßen Verfahrens,
Fig. 2 ein Blockschaltbild der Auswerteeinrichtung,
Fig. 3 ein Diagramm zur Erläuterung der Trendanalyse und
Fig. 4 ein Diagramm zur Erläuterung der Anwendung der Trendanalyse.

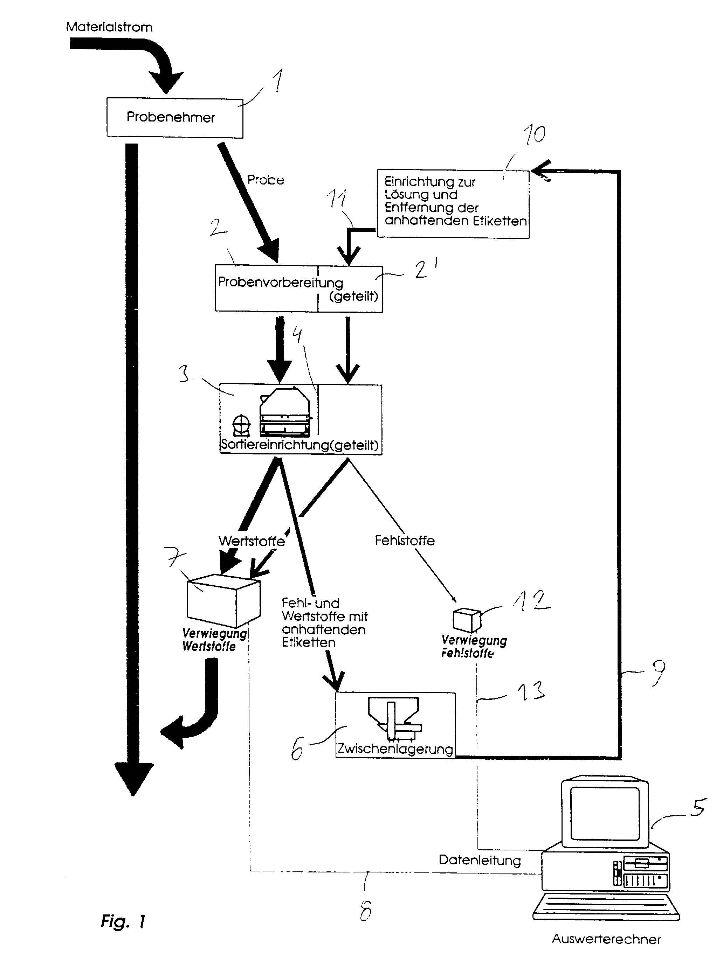

Das erfindungsgemäße Verfahren wird anhand der Fig. 1 beschrieben.

Die Probennahme aus dem Strom des in einer Altglasaufbereitungsanlage gereinigten Altglases und die Probenvorbereitung durch Trocknen, Absaugen der Feinteile und Absieben geschieht auf dieselbe Weise wie in der AT 399 400 A beschrieben ist.

Die Probe wird mit einem Probennehmer 1 aus einem eine Altglasaufbereitungsanlage verlassenden Strom des aufbereiteten Altglases entnommen und einer Aufbereitungsanlage 2 zugeführt. Dort wird die Probe getrocknet und Feinteile abgesaugt oder abgesiebt. Anschließend wird die Probe einer Sortiereinrichtung 3 zugeführt.

Die Sortiereinrichtung 3 weist eine Rutsche auf, über die die Probe in einer einzigen Lage rutscht. Der Materialstrom der Probe passiert dabei zwei über die gesamte Breite der Rutsche verteilt angeordnete Reihen von Sensoren, von denen die einen zur Erfassung von opaken Fremdteilen und die anderen zur Erfassung von Nichteisenteilen dienen. Dabei ist die Rutsche durch eine in deren Längsrichtung verlaufende Wand 4 in zwei ungleich breite Abschnitte unterteilt.

In einem ersten Durchgang wird die Probe ausschließlich auf den breiteren Teil der Rutsche 3 aufgegeben.

An die Rutsche der Sortiereinrichtung 3 schließt eine Freifallstrecke an. Wird nun von einem der Sensoren eine Verunreinigung, wie NE-Teile oder KSP-Teile erkannt, so übermittelt dieser ein Impulssignal an den Rechner 5 entsprechend der Art der Verunreinigung über eine Datenleitung und dieser steuert im Bereich der Freifallstrecke angeordnete Blasdüsen, die im Bereich der dem breiteren Teil der Rutsche zugeordneten Teil der Freifallstrecke in einer sich quer zur Freifallstrecke erstreckenden Reihe angeordnet sind, zeitverzögert an, wodurch alle Teile des Probenstromes, die nicht eindeutig als Glas erkannt werden, aus dem Glasstrom ausblasen. Aus der Dauer der einzelne Impulssignale an den Rechner können auch die Korngrößen der Verunreinigungen errechnet werden.

Bei einem beträchtlichen Teil der aus dem Probenstrom ausgeblasenen Teile handelt es sich um Glasteile, an denen Teile von Etiketten kleben.

Die ausgeblasenen Teile gelangen in einem Restteile- Auffangbehälter 6, wogegen die Glasteile in einen Reinglas-Auffangbehälter 7 gelangen. Dieser Reinglas-Auffangbehälter 7 steht auf einer Wägeeinrichtung, die mit dem Rechner 5 über Signalleitungen 8 verbunden ist.

Der Restteile-Auffangbehälter 6 ist über eine Fördereinrichtung 9 mit einer Einrichtung 10 verbunden, die zum Ablösen der Etiketten von den Glasteilen dient. Eine solche Einrichtung kann z.B. durch eine an ihrer Innenseite mit einem in ihr Inneres vorragenden Schneckengang versehene Trommel, in deren Zentrum ein Brenner angeordnet ist, gebildet sein.

Die Einrichtung 10 kann aber auch durch eine Kammer gebildet sein, in der sich ein Glasstrahlgebläse befindet. Dabei werden die Etiketten durch Bestrahlung der Scherben mit kleinen Glaskugeln mechanisch von den Scherben abgerieben. Der dabei entstehende Glasstaub kann nach dem Absaugen größerer Papierpartikel durch Sieben wieder aufbereitet werden, wobei Feinstteile, die mit Papierpartikel vermischt sein können, problemlos eingeschmolzen werden können.

Die Einrichtung 10 ist ausgangsseitig über eine Fördereinrichtung 11 mit einer Aufbereitungsanlage 2' verbunden, die im wesentlichen gleich wie die Aufbereitungsanlage 2 für die Probe ausgebildet ist. Das aufbereitete Material wird dem schmäleren Teil der Rutsche der Sortiereinrichtung 3 aufgegeben.

Im dem schmäleren Bereich der Rutsche zugeordneten Bereich der dieser nachgeordneten Freifallstrecke sind in einer sich quer zur Freifallstrecke erstreckenden Reihe angeordnet Blasdüsen vorgesehen, die von den Sensoren erfaßte Fremdteile, wie KSP und NE-Teile in einen Fremdstoffbehälter 12 ausblasen, der mit einer Wägeeinrichtung verbunden ist, die über eine Signalleitung 13 mit dem Rechner 5 verbunden ist.

Damit kann der Rechner 5 die Gewichtsänderung infolge der ausgeblasenen Verunreinigung ermitteln und diese der Art der Verunreinigung (NE oder KSP) zuordnen und die jeweils letzte Gewichtsänderung der betreffenden Gruppe von Verunreinigungen zuzählen . Damit läßt sich die Masse der aussortierten NE-Teile der Probe und jene der KSP Teile der Probe genau ermitteln.

Da der Rechner 5 auch mit der Wägeeinrichtung des Reinglas-Auffangbehälters 7 verbunden ist, ermittelt er auch die Masse des Reinglases einer Probe und kann die Masse der aussortierten NE-Teile und KSP Teile zur Masse des Reinglases in Bezug setzen.

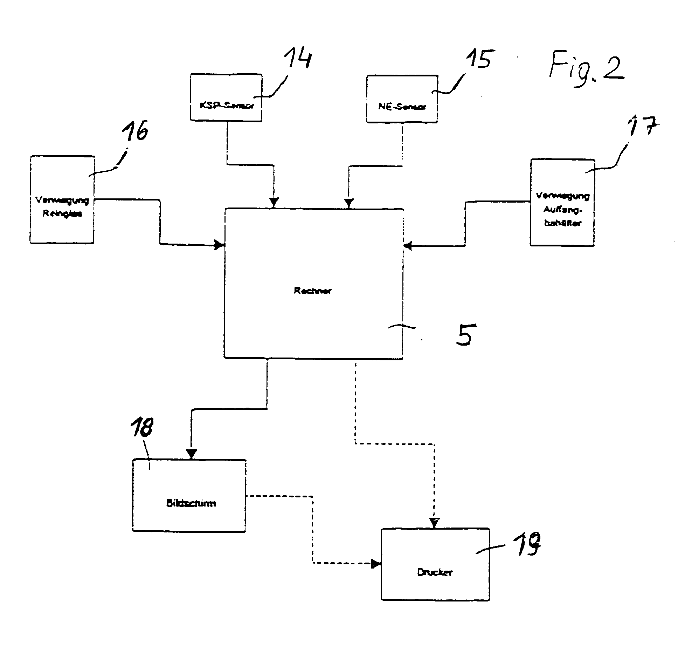

Wie aus der Fig. 2 zu ersehen ist, ist der Rechner 5 eingangsseitig mit den Sensoren 14 und 15 zur Erfassung von KSP Teilen, bzw, NE-Teilen, und den Wägeeinrichtungen 16, 17 zur Erfassung der Gewichtszunahmen des Reinglasbehälters 7 und des Fremdstoffbehälters 6 verbunden und ausgangsseitig mit einem Bildschirm 18 und einen Drucker 19.

Zur Auswertung werden die im Rechner 5 gespeicherten Gewichtszunahmen des Auffangbehälters 6 getrennt nach NE- und KSP-Verunreinigungen über einen einstellbaren, definierten Zeitraum t, vorzugsweise zwischen 1 und 30 Minuten, ins Verhältnis gesetzt zur gesamten in diesem Zeitraum durchgesetzten Probenmenge. Diese Probenmenge setzt sich zusammen aus den im definierten Zeitraum t angefallenen Gewichtszunahmen infolge NE- und KSP-Teilen im Auffangbehälter 6 plus den Zunahmen im Behälter 7. Die Ergebnisse dieser Auswertungen werden auf einem Bildschirm 19 angezeigt und können bei Bedarf durch den Drucker 18 ausgedruckt werden. Jedenfalls bleiben sie im Rechner gespeichert.

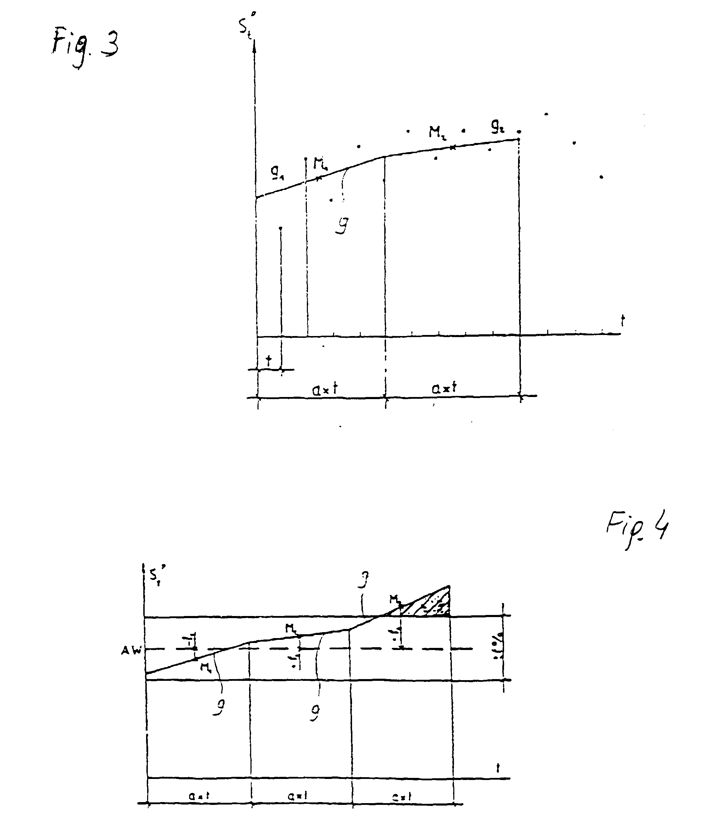

Zur Trendanalyse ist wie aus Fig. 3 ersichtlich, vorgesehen, daß eine gewisse Anzahl a zwischen 4 und 10 hintereinanderfolgender Auswertungsergebnisse solcher Auswertungszyklen über eine Zeitachse als Punkthaufen von NE/Probemenge - sowie KSP/Probemengenverhältnissen aufgezeichnet werden und mittels eines Regressionsverfahrens Ausgleichgerade g durch diese beiden Punkthaufen gelegt werden. Die positiven oder negativen Steigungen dieser Geraden zeigen den während dieser Auswertungszyklen herrschenden Trend zu einer Verschlechterung bzw. Verbesserung der Reinheit der Probe an. Auch dieser wird auf einem Bildschirm angezeigt und kann ausgedruckt werden.

In einer vereinfachten Trendanalyse kann anstelle der während dieser Auswertungszyklen ermittelten Verhältniszahlen zwischen NE-Gewichtszunahme oder KSP-Gewichtszunahme zu Probenmenge auch nur die Anzahl der Impulssignale für NE- und/oder KSP-TEILEN während des Zeitraumes t zur Probenmenge als Verhältniszahl(en) ausgewiesen werden und in eine Trendanalyse, wie oben beschrieben einfließen.

Weiters ist vorgesehen, daß bei der jeweils aktuellen Trendanzeige auch die Trends von wenigstens der vorhergehenden Auswertung angezeigt werden.

Zudem ist vorgesehen, die Mittelwerte der Ergebnisse aus den einzelnen Auswertungszyklen in einen Speicher zu schreiben. In diesem Speicher sollen zwischen 100 und 500 Auswertezyklen Platz haben. Der Speicher wird immer wieder aktualisiert, indem der letzte Wert hereingenommen und der älteste verworfen wird. So soll ein durchschnittlicher Anlagenwert AW ermittelt werden.

Für die Ermittlung des Anlagewertes AW sollen zumindest die innerhalb der letzten Stunde in den einzelnen Zeiträumen t erfaßten Mittelwerte herangezogen und das entsprechende Mittel errechnet werden. Bei längerem Betrieb kann der Anlagenwert AW aus allen im Speicher des Rechners 5 befindlichen Mittelwerten errechnet werden.

Ausgehend von dem Anlagenwert AW können, wie aus der Fig. 4 ersichtlich ist, Warngrenzen festgelegt werden, die um den Wert ±f unter und über dem Anlagenwert AW liegen.

Während des Probenahmezyklusses wird die Abweichung des Mittelpunktes M der letzten errechneten Ausgleichsgerade g vom Erfahrungswert AW in Prozent ausgewiesen.

Dieser Prozentsatz gibt die Güte der in den letzten a Zeiteinheiten beprobten Materialmenge wieder (Fig. 4).

Beim Überschreiten der vorgegebenen Warengrenzen wird vom Rechner über Regeleinrichtungen in den Aufbereitungsprozeß für Altglas (A) eingegriffen z.B. durch Zurücknahme der Aufgabemenge in einer nicht dargestellten Altglas- Aufbereitungseinrichtung.

Dabei wird bei Über- oder Unterschreiten einer Warngrenze zweckmäßigerweise eine Handsichtung einer Probe des im Behälter 7 gesammelten Materials durchgeführt. Bestätigt sich dabei z.B. eine zu schlechte Güte der Probe, so kann dies durch einen Eingriff in den Betrieb einer vorgeschalteten AltglasAufbereitungsanlage (nicht dargestellt) im Sinne einer Verminderung des Durchsatzes an aufzubereitendem Altglas korrigiert werden. Andererseits kann bei Unterschreiten der unteren Warngrenze nach Bestätigung der entsprechend hohen Qualität der Probe durch eine Handsichtung der Durchsatz der AltglasAufbereitungsanlage erhöht werden, um deren Betrieb wirtschaftlicher zu gestalten.

Bei der Handsichtung werden mit den Fremdstoffen mit ausgeblasene Glasteilchen ausgesondert und nach Erfahrungswerten auf die beiden Gruppen von Fremdstoffen NE- und KSP-TEILEN aufgeteilt, wobei mit den sehr leichten NE- Teilen, wie Flaschenverschlüssen mehr Glasteile mit ausgeblasen werden als bei den doch schwereren KSP-TEILEN Teilen.

Am Ende jeder Probe errechnet ein Programm den Durchschnitt aller Abweichungen und führt so zu einer Aussage über die Reinheit der Gesamtprobe. Dies wird ausgedruckt und dient zur Dokumentation.

Um mit Hilfe dieser Art der Probenanalayse auch genaue Aussagen über die Menge der in der Probe enthaltenen Verunreinigungen treffen zu können - insbesondere, ob die Materialgüte den vorgegebenen Standards oder Erwartungswerten entspricht - ist die Einbeziehung von Vergleichswerten erforderlich.

Dazu werden die Gewichtsverhältnis- bzw. normierten Schlagzahlwerte bezogen auf die gesamte Probenmenge und den gesamten Probenzeitraum von einer großen Anzahl vorangegangener ordnungsgemäß abgeschlossener Probennahmen in einen Speicher geschrieben. Der Speicher kann nach jeder Probennahme aktualisiert werden, indem der letzte Wert hereingenommen und der älteste verworfen wird. Diese Funktion läßt sich aber auch - nach Erreichen eines stabilen Zustandes - stillsetzen.

## Patentansprüche

1. Verfahren zur Bestimmung der Reinheit von aufbereitetem Altglas, bei dem die Probenmenge aus dem aufbereiteten Altglasstrom entnommen und vorzugsweise einlagig aufgeschüttet und über eine Freifallstrecke rieseln gelassen, und die Fremdkörper nach Nichteisen-Metallen und opaken Fremdstoffen nach einer getrennten Erfassung dieser Gruppen von Fremdstoffen ausgeblasen und gewogen werden und zur Feststellung der Güte der Probe die Verhältniszahlen von Nichteisen-Metall-Beimengungen zur gesamten Probenmenge, bzw. der opaken Fremdstoffe zur gesamten Probenmenge ermittelt werden, wobei diese Gruppen von Fremdstoffe gemeinsam kontinuierlich gewogen und die Gewichtszunahmen je nach dem welche Gruppe von Fremdstoffen - Nichteisen-Metalle oder opake Fremdstoffe - unmittelbar vor einer Gewichtszunahme erfaßt wurde, dieser Gruppe von Fremdstoffen zugezählt wird, **dadurch gekennzeichnet,** daß vor der Erfassung der erwähnten Gruppen von Fremdstoffen in einem ersten Schritt aus dem über die Freifallstrecke rieselnden Materialstrom Glasstücke aussortiert und die vorerst als Fremdstoffe taxierten Stücke, gegebenenfalls nach einer Zwischenlagerung, von anhaftenden Resten von Etiketten u.dgl. befreit werden und danach wieder über eine Freifallstrecke rieseln gelassen werden, wobei Glasstücke und die Fremdstoffe voneinander getrennt und je nach Erfassung den opaken Fremdstoffen oder den Nichteisen-Metallen zugeordnet werden.

2. Verfahren nach Anspruch 1, **dadurch gekennzeichnet,** daß die von anhaftenden Etiketten befreiten vorerst als Fremdstoffe taxierten Stücke über die gleiche Freifallstrecke, jedoch in einem abgetrennten Bereich derselben rieseln gelassen wird, wie eine Probenmenge und gemeinsam mit einer solchen.

3. Einrichtung zur Durchführung des Verfahrens nach Anspruch 1 oder 2, bei der eine einer Rutsche nachgeordnete auf einen Reinglas-Auffangbehälter (7) gerichtete Freifallstrecke vorgesehen ist, in deren Bereich über die Breite der Rutsche bzw. der Freifallstrecke verteilt Sensoren (14, 15) zur Erfassung opaker Teile und Nichteisen-Teilen angeordnet sind, die in quer zur Freifallstrecke verlaufenden Reihen verteilt angeordnete Blasdüsen steuern, in deren Blas- bzw. Ablenkbereich mindestens ein Fremdstoff-Auffangbehälter (12) ngeordnet ist, wobei die Auffangbehälter (7, 12) mit Wägeeinrichtungen (16, 17) versehen sind, die mit einem Rechner (5) verbunden sind, an den auch die Sensoren (14, 15) angeschlossen sind, **dadurch gekennzeichnet,** daß zumindest über einen abgetrennten Teil der Breite der Freifallstrecke der Blas- bzw. Ablenkbereich der Blasdüsen auf einen Restteile-Auffangbehälter (6) zur Aufnahme der restlichen Teile des Materialstromes gerichtet ist, und eine Einrichtung (10) zur Entfernung von Etiketten von den Restteilen vorgesehen ist, die ausgangsseitig über eine Fördereinrichtung (11) zumindest mit einem Teil einer Rutsche verbunden ist, wobei im Bereich dieses Teiles der Rutsche, bzw. Freifallstrecke Sensoren (13, 14) zur Erfassung von opaken Teilen und Nichteisen-Teilen in zwei voneinander in Fallrichtung voneinander distanzierten, Reihen angeordnet sind und im Blas- bzw. Ablenkbereich der in dem diesen Teil der Rutsche entsprechenden Teil der Freifallstrecke angeordneten von diesen Sensoren (13, 14) gesteuerten Blasdüsen der Fremdstoff-Auffangbehälter (12) angeordnet ist.

4. Einrichtung nach Anspruch 3, **dadurch gekennzeichnet,** daß die Einrichtung (10) zur Entfernung von Etiketten durch eine Trommel gebildet ist, an deren innerer Wand eine schraubenlinienförmige, nach innen abstehende Rippe, oder Teile einer solchen Rippe angeordnet sind und im Zentrum dieser an beiden Stirnseiten offenen Trommel ein Brenner angeordnet ist.

5. Einrichtung nach Anspruch 3, **dadurch gekennzeichnet,** daß die Einrichtung (10) zur Entfernung von Etiketten durch eine mit einem Glas-Strahlgebläse zum bestrahlen der anhaftende Etiketten aufweisenden Glasscherben mit Glaskörnern versehene Kammer gebildet ist.

6. Einrichtung nach einem der Ansprüche 3 bis 5, **dadurch gekennzeichnet,** daß lediglich eine Rutsche vorgesehen ist, die in ihrer Breite durch eine sich in deren Längsrichtung erstreckende Wand (4) unterteilt ist.

7. Einrichtung nach einem der Ansprüche 3 bis 6, **dadurch gekennzeichnet**, daß außer den Sensoren (13) zur Erfassung opaker Teile auch Sensoren (14) zur Erfassung von Nichteisen-Teilen über die gesamte Breite der Rutsche(n) bzw. Freifallstrecke(n) verteilt angeordnet sind, wobei diese Sensoren in zwei voneinander distanzierten Reihen angeordnet sind.
